# EUROPEAN PATENT APPLICATION

(11) **EP 4 552 539 A1**
(43) Date of publication of application: **14.05.2025**
(21) Application number: 24212719.9
(22) Date of filing: 13.11.2024
(51) Int. Cl.: A47J 19/02, A47J 36/32

(54) **CORDLESS CITRUS JUICER**

(30) Priority: 13.11.2023 US 202363598224 P
(71) Applicant: Whirlpool Corporation, Benton Harbor, MI 49022 (US)
(72) Inventor: Arnold, Richard D., c/o Whirlpool Corporation, Benton Harbor, 49022 (US); Mock, Brandon T., c/o Whirlpool Corporation, Benton Harbor, 49022 (US); Motogbe, Euget Z., c/o Whirlpool Corporation, Benton Harbor, 49022 (US); Salcedo Ortega, Francisco, c/o Whirlpool Corporation, Benton Harbor, 49022 (US); Schutte, Nicholas H., c/o Whirlpool Corporation, Benton Harbor, 49022 (US); Wilson, Rex, c/o Whirlpool Corporation, Benton Harbor, 49022 (US)
(74) Representative: Eisenführ Speiser

(57) **Abstract**

A citrus juicer includes a base unit including a housing enclosing a drive motor. The housing defines a battery-receiving cavity along a portion thereof with a plurality of terminals exposed therein. The citrus juicer also includes a reservoir assembly mountable on the base unit and enclosing a liquid receiving cavity and a juicing implement rotatably mounted at least partially within the reservoir assembly and configured to be driven by the motor when the reservoir assembly is mounted on the base. A battery is mountable in the battery-receiving cavity in electrical connection with the plurality of terminals such that the base unit is configured to operably power the drive motor using the battery.

## Description

### CROSS-REFERENCE TO RELATED APPLICATIONS

This application claims priority to and the benefit under 35 U.S.C. § 119(e) of U.S. Provisional Application No. 63/598,224, filed on November 13, 2023, entitled "CORDLESS CITRUS JUICER," the disclosure of which is hereby incorporated herein by reference in its entirety.

### BACKGROUND OF THE DISCLOSURE

The present disclosure generally relates to a citrus juicer, and more specifically, to a powered citrus juicing appliance.

Existing products for juicing citrus fruits can have several form factors and corresponding modes of operation. In one implementation, a citrus juicer can be in the form of a reamer, which is shaped to compress the inside of the fruit against the rind, to rupture the pockets of juice therein for extraction. In some applications, a reamer can be included as the working implement within a powered juicing appliance, in which the reamer is driven in rotational motion by a motor within a base of the appliance. Often, such appliances include a reservoir to collect the expressed juice, with such reservoir being opened (i.e., a throughput juicer) or enclosed, such that either a vessel must be positioned adjacent the appliance, or the appliance must be tipped to be emptied after the juicing operation or when full. Additionally, such appliances must be plugged into mains power for use, limiting the utility.

### SUMMARY OF THE DISCLOSURE

According to one aspect of the present disclosure, a citrus juicer includes a base unit including a housing enclosing a drive motor. The housing defines a battery-receiving cavity along a portion thereof with a plurality of terminals exposed therein. The citrus juicer also includes a reservoir assembly mountable on the base unit and enclosing a liquid receiving cavity and a juicing implement rotatably mounted at least partially within the reservoir assembly and configured to be driven by the motor when the reservoir assembly is mounted on the base. A battery is mountable in the battery-receiving cavity in electrical connection with the plurality of terminals such that the base unit is configured to operably power the drive motor using the battery.

According to another aspect of the disclosure, a citrus juicer includes a base unit including a housing enclosing a drive motor. The housing defines a battery-receiving cavity along a portion thereof with a plurality of terminals exposed therein. The citrus juicer also includes a reservoir assembly mountable on the base unit and enclosing a liquid receiving cavity and a juicing implement rotatably mounted at least partially within the reservoir assembly and configured to be driven by the motor when the reservoir assembly is mounted on the base. A battery is releasably mountable in the battery-receiving cavity by movement of the battery into the battery-receiving cavity in a radial direction with respect to the base unit. Mounting the battery within the battery-receiving cavity connects the battery with the plurality of electrical terminals for powering the motor.

According to another aspect of the disclosure, a citrus juicer includes a base unit including a housing enclosing a drive motor. The housing defines a battery-receiving cavity along a portion thereof with a plurality of terminals exposed therein. The citrus juicer also includes a reservoir assembly mountable on the base unit and enclosing a liquid receiving cavity and a juicing implement rotatably mounted at least partially within the reservoir assembly and configured to be driven by the motor when the reservoir assembly is mounted on the base. A controller is configured to operate the motor including by driving rotational operation of the juicing implement in alternating opposite directions to cause an oscillating rotation of the juicing implement.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of a citrus juicer according to the disclosure;
FIG. 2 is an exploded assembly view of the citrus juicer;
FIG. 3 is a side detail view of a spout and valve arrangement associated with the citrus juicer;
FIG. 4 is a side detail view of the spout and valve arrangement of FIG. 3 in an open condition;
FIG. 5 is a side cross-section view of the citrus juicer; and
FIG. 6 is a top view of the citrus juicer;

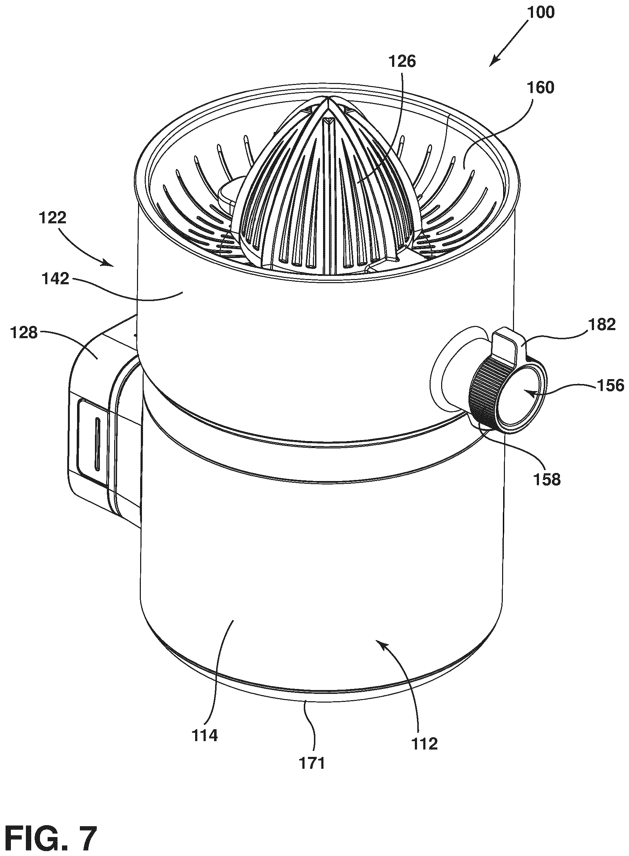

FIG. 7 is a perspective view of a variation of the citrus juicer according to another aspect of the disclosure;
FIG. 8 is a side view of a valve mechanism associated with the citrus juicer in a first state of operation;
FIG. 9 is a front cross-sectional view of the valve mechanism in the first state of operation;
FIG. 10 is a side view of the valve mechanism associated with the citrus juicer in a second state of operation; and
FIG. 11 is a front cross-sectional view of the valve mechanism in the second state of operation.

The components in the figures are not necessarily to scale, emphasis instead being placed upon illustrating the principles described herein.

### DETAILED DESCRIPTION

The present illustrated embodiments reside primarily in combinations of method steps and apparatus components related to a citrus juicer. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

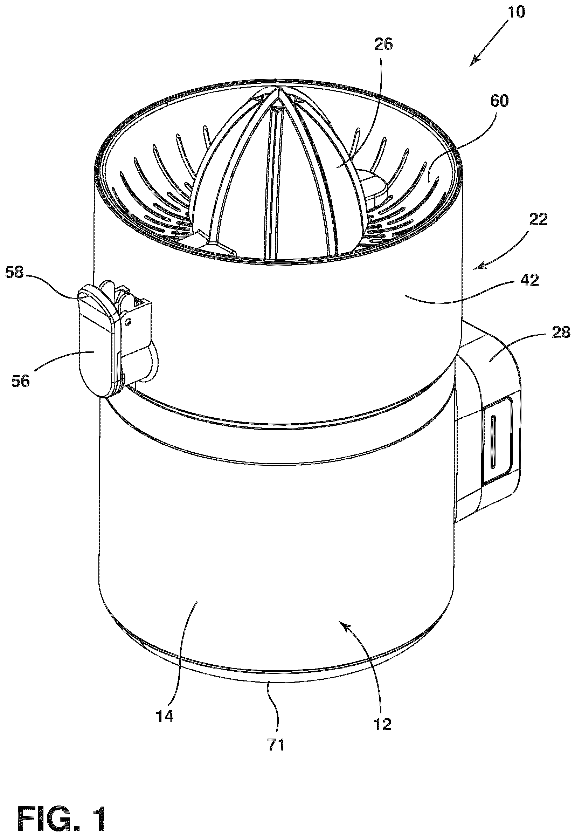

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Ordinal modifiers (i.e., "first", "second", etc.) may be used to distinguish between various structures of a disclosed article in various contexts, but such ordinals are not necessarily intended to apply to such elements outside of the particular context in which they are used and that, in various aspects different ones of the same class of elements may be identified with the same, context-specific ordinal. In such instances, other particular designations of the elements are used to clarify the overall relationship between such elements. Ordinals are not used to designate a position of the elements, nor do they exclude additional, or intervening, non-ordered elements or signify an importance or rank of the elements within a particular class.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

For purposes of this disclosure, the terms "about", "approximately", or "substantially" are intended to mean that a value of a parameter is close to a stated value or position. However, minor differences may prevent the values or positions from being exactly as stated. Thus, unless otherwise noted, differences of up to ten percent (10%) for a given value are reasonable differences from the ideal goal of exactly as described. In many instances, a significant difference can be when the difference is greater than ten percent (10%), except as where would be generally understood otherwise by a person of ordinary skill in the art based on the context in which such term is used.

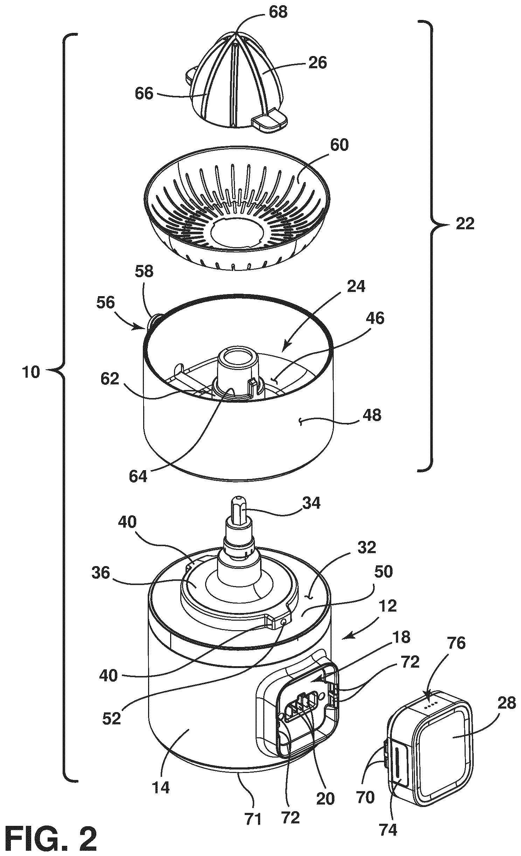

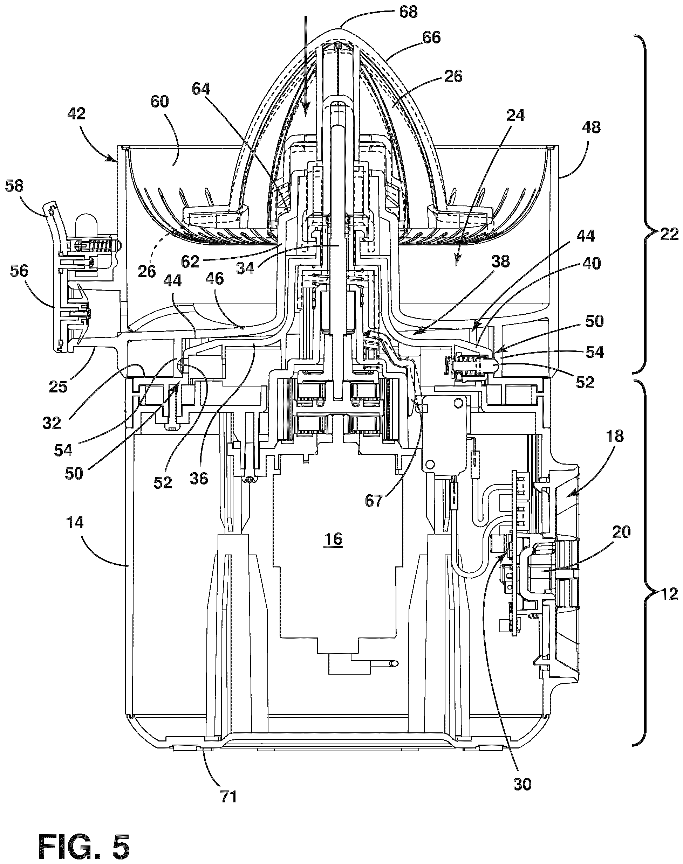

Referring to FIGS. 1-6, reference numeral 10 generally designates a citrus juicer. The citrus juicer 10 includes a base unit 12 including a housing 14 enclosing a drive motor 16 (FIG 5). The housing 14 defines a battery-receiving cavity 18 along a portion thereof with a plurality of terminals 20 (FIG. 2) exposed therein. The citrus juicer 10 also includes a reservoir assembly 22 mountable on the base unit 12 and enclosing a liquid receiving cavity 24 and a juicing implement 26 rotatably mounted at least partially within the liquid receiving cavity 24 and configured to be driven by the motor 16 when the reservoir assembly 22 is mounted on the base 12. A battery 28 is mountable in the battery-receiving cavity 18 in electrical connection with the plurality of terminals 20 such that the base unit 12 is configured to operably power the drive motor 16 using the battery 28.

As can be appreciated, the use of the battery 28 to power the drive motor 16 is such that the citrus juicer 10 described herein is operable without having to plug the citrus juicer 10 into an external power source (such as a wall outlet or the like) and results in the disclosed citrus juicer 10 being characterized as "cordless". In this manner, the citrus juicer 10 can be placed and operated in any convenient location along the counter space provided within the kitchen, regardless of the proximity of such location to a power outlet or an available power outlet. As shown in FIG. 2, the battery 28 is removably coupled with the housing 14 of the base 12 within the depicted battery-receiving cavity 18 such that a selected battery 28 of, potentially, a number of available compatible batteries 28 can be selected and attached with the citrus juicer 10 for powering the operation thereof by way of the electrical connection facilitated by connection of terminals of the battery 28 with the terminals 20 of the citrus juicer 10 that are exposed within the battery-receiving cavity 18. In this manner, the battery 28 can be removed from the citrus juicer 10 for use with another compatible kitchen appliance (such as a hand mixer, a hand blender, a countertop blender, or a food processor) or to be replaced with a charged battery 28, such as when the current battery 28 has become depleted. In this manner, a depleted battery can be charged using a compatible charger having mechanical components similar to the battery-receiving cavity 18 and terminals 20 shown in connection with the present citrus juicer 10. An example of such a charger is described in the co-pending, commonly-assigned U.S. Provisional Patent Application filed contemporaneously herewith under the attorney docket number SUB-15280F-US-PSP[2], the entire contents of which are incorporated by reference herein.

The battery 28 and the corresponding electronic circuitry 30 (FIG. 5) for controlling the operation of the citrus juicer 10, including the operation of drive motor 16 can be configured according to an architecture using a voltage in the range of about 10-12 V and in one implementation 12 V, with it being understood that the actual voltage supplied and utilized may vary within a range around the described desired operating voltage according to factors generally understood in the art. In general, such a voltage may be sufficient for operation of the citrus juicer 10 including operation of the motor 16, which is generally understood to be a direct-current (DC) motor and in one aspect a brushless DC motor, at an acceptable torque for typically-acceptable use as a citrus juicer 10 within an acceptable operating speed. Additional aspects of the electronic, battery-powered operation of the citrus juicer 10 are described further below.

With reference to FIGS. 1-6, certain features of the disclosed citrus juicer 10 may add to the useability or general performance of the appliance in ways not necessarily dependent on the use of the above-described battery 28 to exhibit such effect. In one aspect, the citrus juicer 10 may include a drop-in interface between the reservoir assembly 22 and the base unit 12. In general, the base 12 is configured for resting on a countertop surface with the reservoir assembly 22 supported on the base 12. The motor 16 housed in the base 12 that rotates a drive shaft 34 that extends from the center of an upper projection 36 on an upper surface 32 of the base 12. The reservoir assembly 22 is mountable on the base 12 by receipt of the projection 36 within a lower cavity 38 defined on the reservoir assembly 22. As shown in FIGS. 2 and 5, The projection 36 can define at least one alignment tab 40 extending outwardly away from the drive shaft 34 along the upper surface 32 of the base 12. In this respect, the reservoir assembly 22 can include a bowl body 42 defining the lower cavity 38 of the reservoir assembly 22, and the bowl body 42 can define at least one notch 44 corresponding with the alignment tab 40 for receipt thereof into the notch 44 when the reservoir assembly 22 is mounted on the base unit 12 by substantially vertical movement of the bowl body 42 toward the base unit 12 (e.g., from a location similar to that shown in FIG. 2 to that of FIG. 1). In one aspect, the present arrangement by which the reservoir assembly 22 couples with the base 12 may be characterized as a drop-in connection. In particular, the arrangement is such that the bowl body 42 couples with the base 12 when lowered into position over the projection 36 without requiring any twisting to engage the coupling which may be associated with, for example, a threaded or bayonet-style attachment.

In the arrangement shown in FIG. 2, for example, the base 12 includes two tabs 40 extending outwardly from the projection 36 and the bowl body 42 includes two corresponding notches 44 that align with the tabs 40. In one example, the tabs 40 can be of different sizes and/or shapes (or in an asymmetric relative location) such that the bowl body 42 can only be assembled onto the base 12 in one orientation (e.g., that of FIG. 1). This arrangement helps to prevent rotation of the reservoir assembly 22 relative to the base unit 12, including under torque of the motor 16, delivered by the drive shaft 34, as discussed further below.

In addition, the bowl body 42 defines the above-referenced liquid receiving cavity 24 and includes a lower wall 46. The lower cavity 38 of the reservoir assembly 22 can be defined within the lower wall 46 so as to extend inwardly from the lower wall 46. In this aspect, the cavity 38 can be inset relative to a side wall 48 of the bowl body 42 that extends upward from the lower wall 46 to further define the liquid receiving cavity 24. In this arrangement, the projection 36, which may be generally circular in shape aside from the tabs 40, can fit within the cavity 38 in a generally close contact therewith so that the bowl body 42 is generally located relative to the base 12 with the lower wall 46 resting on the upper surface 32. As shown in FIG. 5, the side wall 48 can extend downwardly past the lower wall 46 to visually join with the base 12 such that the inward-set lower cavity 38 is at least partially obscured.

As shown in FIGS. 2 and 5, a detent feature 50 can be defined between the notch 44 and the projection 36 and can be configured to provide user feedback when the reservoir assembly 22 is moved into a mounted position (FIG. 1) on the base unit 12 including receipt of the projection 36 into the notch 44. In the present example, at least one of the alignment tabs 40 can include a spring-biased ball 52 that can compliantly engage with a corresponding cavity 54 in the aligned notch 44 to provide a snap-fit between the bowl body 42 and the base unit 12, which may particularly add a retention force to such fit. In a further aspect, the detent mechanism 50 can function as an interlock that is configured to prevent activation of the motor 16 without the bowl body 42 present on the base 12, although in the present example, the detent mechanism 50 is included only for feedback and/or retention. In various examples, a similar detent mechanism 50 may be included between each tab 40 and notch 44, although some arrangements may only include one detent mechanism 50.

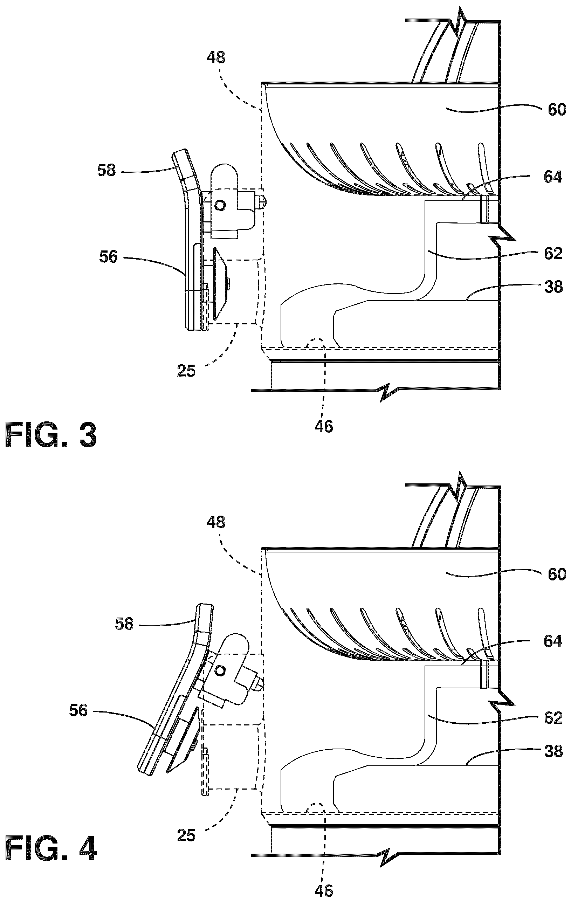

The bowl body 42 is sized to retain the juice output from fruit (including larger fruit such as grapefruit or multiple oranges, lemons, or the like) for dispensing once juicing is complete. As shown in FIGS. 3 and 4, the reservoir assembly 22 includes a dispensing spout 25 that may be integrally formed with the bowl body 42, for example. In the illustrated example, a flap-valve 56 is hingedly, or otherwise rotatably, coupled with the dispensing spout 25 and/or the adjacent bowl body 42 and may be biased toward a closed position over the spout 25 (FIG. 3). In this arrangement, the user can depress the opening lever 58 on the flap valve 56 to open the valve 56 (FIG. 4) and dispense the collected juice from the liquid receiving cavity 24. In one aspect, the valve 56 can have a bi-stable biasing arrangement, wherein it remains open until closed by the user once it is moved into the fully-open position (FIG. 4). Notably, the height of the base 12 is such that the spout 25 is positioned in location at a height that is configured to accommodate relatively taller vessels, such a mixing bowl bodies, tumblers, or the like.

Referring back to FIGS. 1 and 2, in addition bowl body 42, the reservoir assembly 22 can include a strainer 60 (which may also be referred to as a sieve) removably disposable in the bowl body 42. In this manner, the bowl body 42 can define an interior support 62 through which the drive shaft 34 extends. The interior support 62 can define a ledge 64 that at least partially supports the strainer 60 within a top portion of the bowl body 42. The strainer 60 is configured to capture pulp, seeds, and other solid materials, while allowing the extracted juice to collect in the liquid receiving cavity 24. In this arrangement, the juicing implement 26 is in the form of a reamer 26 that is mounted centrally within the bowl body 42 and the strainer 60. In one aspect, the reamer 26 sits over an upper portion of the interior support 62 in a rotating manner. The reamer 26 connects with the drive shaft 34 through the interior support 62 and, accordingly, through the strainer 60 such that the rotation of the drive shaft 34 causes rotation of the reamer 26 for extraction of juice from fruit that is pressed into engagement therewith. As shown, the reamer 26 can include a plurality of ribs 66 that meet in a pointed tip 68 configured to aid in the extraction of juice from citrus fruits.

In operation, the juicer 10 is configured to activate operation to cause rotation of the juicing implement 26 when it is depressed to a predetermined extent under a force above a predetermined threshold (i.e., by being depressed downward by an engaged piece of cut citrus fruit, as shown in FIG. 5). More particularly, the juicing implement 26 can be moveable in a downward direction D into the liquid receiving cavity 24 against an upward spring bias. Such movement of the juicing implement 26 in the downward direction D can operate a switch 67 configured to activate operation of the motor 16 to drive the juicing implement 26, as discussed above.

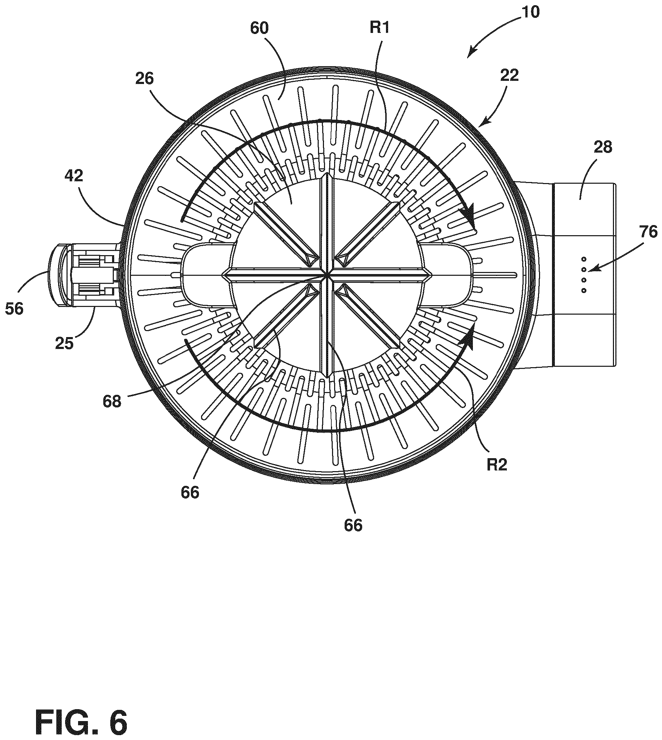

As shown in FIG. 6, during operation, the juicer 10 may continuously reverse the rotating direction R1 and R2 of the juicing implement 26. This arrangement is facilitated by the use of a direct-current motor 16 powered by the aforementioned battery 28. In one aspect, the above-referenced electronic circuity 30 can include a controller in the form of a microprocessor or the like that can include programming to operate the citrus juicer 10, including based on the status of the switch 66 discussed above. In various aspects, the programming can include either firmware or software that is specifically adapted to operate the motor 16 via the current received from the battery 28. In one example, the programming can be adapted to activate operation of the motor 16 when switch 66 is depressed and to reverse and operating direction R1, R2 of the motor 16 at predetermined intervals during operation(e.g., as long as the switch 66 remains in the depressed condition) to cause oscillating rotation of the juicing implement 26. In one example, the motor 16 can be reversed after 360° of rotation in each direction (or after a time interval of, for example between 2 seconds and 5 seconds). Additionally, the direction R1, R2 may reverse from the prior direction after each successive deactivation and reactivation of the juicer 10 by way of the switch 66.

Returning to FIG. 2, the battery-receiving cavity 18 can be configured to receive the battery 28 in a releasably-retaining arrangement by movement of the battery 28 into the battery-receiving cavity 18 in a radial direction with respect to the base unit 12. In the illustrated example, the battery-receiving cavity 18 is positioned above the bottom surface 71 of the base unit 12. As further shown in FIG. 2, the battery 28 is adapted for a snap-fit arrangement with the battery-receiving cavity 18, wherein the battery 28 is moved in a lateral direction L toward the battery-receiving cavity 18 and pressed into engagement therewith. In this arrangement, the terminals 20 of the battery-receiving cavity 18 engage with aligned battery terminals for electrical connection with the battery 28 when fully received in the battery-receiving cavity 18. As shown, the battery 28 can include spring-loaded tabs 70 that are urged outwardly such that they can be moved inwardly by initial engagement with corresponding notches 72 in the battery-receiving cavity 18 before moving outward behind the notches 72 when the battery 28 is fully received in the battery-receiving cavity 18 for fixed retention therewith. When the battery 28 is to be removed, buttons 74 associated with the tabs 70 can be depressed to move the tabs 70 inward, thereby releasing them from the notches 72. As further shown, the battery 28 is positioned in an orientation with charge-level indicator lights 76 thereof directed upward for visibility when in use with the citrus juicer 10.

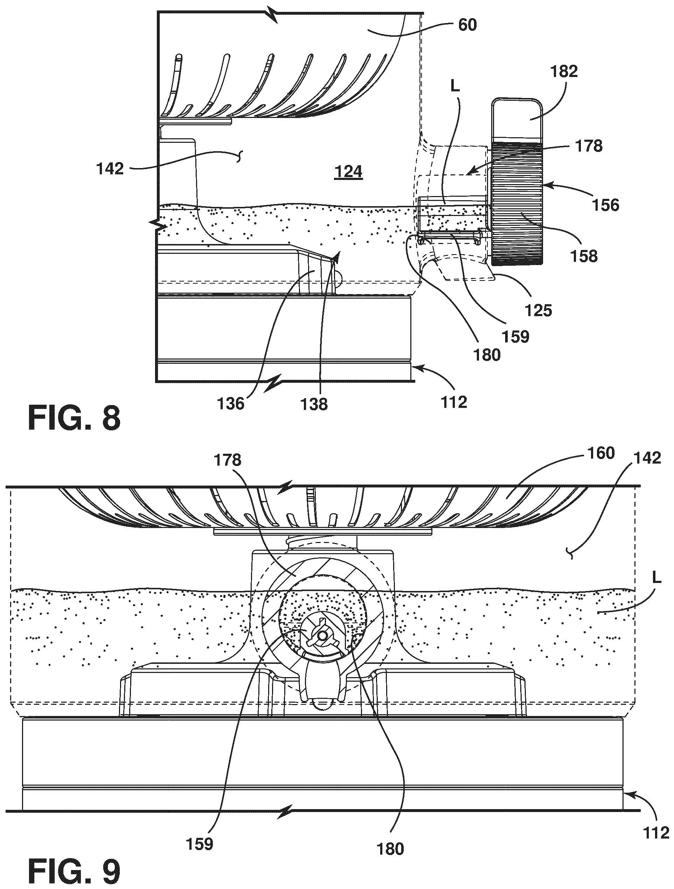

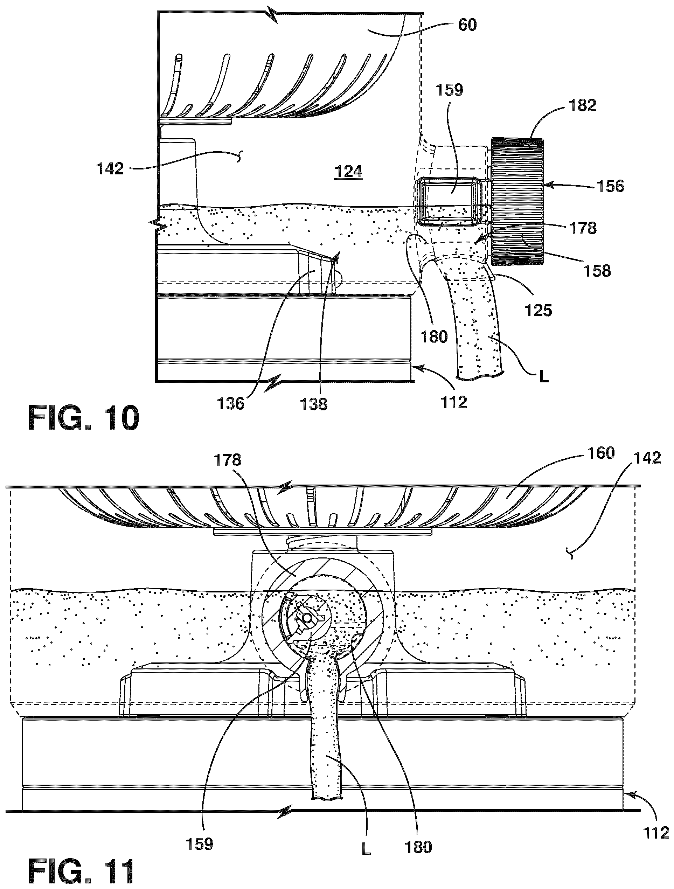

Turning to FIGS. 8-11, (in which like features are shown with similar reference numbers as used above, increased by 100 and in which all features are generally similar, unless otherwise discussed herein) an alternative arrangement for the valve 156 is shown, in which the bowl body 142, as discussed above, defines a valve housing 178 extending from the bowl body 142 adjacent the lower portion of the liquid receiving cavity 124. A fluid outlet in the form of a downwardly angled dispensing spout 125 is in communication with a side wall 180 of the valve housing 178 to define a fluid flow path from the liquid receiving cavity 124. A valve body 159 is rotatably coupled within the valve housing 178 and is moveable into the closed position, shown in FIGS. 8 and 9. When in the closed position, the valve body 159 which a portion of the valve body 159 extends over an intersection of the fluid outlet 125 with the valve housing 178 so as to contact the inner surface of the side wall 180 in the area that surrounds the intersection to close off the flow path to the dispensing spout 125. In this arrangement, the closure of the fluid flow path maintains the liquid L within the liquid receiving cavity 124. The valve body 159 is also moveable into the dispensing position, shown in FIGS. 10 and 11, and in which the intersection of the valve housing 178 with the dispensing spout 125 is uncovered by the valve body 159. In this position, the fluid flow path out of the liquid receiving cavity 124 is open such that any liquid L collected therein can be dispensed. In this arrangement, the valve body 159 can be at least partially enclosed by a knob 158 to which the valve body 159 can be coupled (including, in one aspect, by integral formation therewith). The knob 158 can be used to manipulate the position of the valve body 159 to selectively open and close the fluid flow path out of the liquid receiving cavity 124. In one aspect, the arrangement of the valve body 159 within the valve housing 178 can be characterized as a butterfly valve that can move the valve between the open position and the closed position by a "quarter-turn" motion (i.e., rotation by 90° or less, including in either direction from the zero, or closed, position) by user rotation of the knob 158, which may include a ridge 182 or other indicator of its position. In an alternative arrangement, the position of the valve body 159 can be controlled by lever or other similar structure.

It will be understood by one having ordinary skill in the art that construction of the described disclosure and other components is not limited to any specific material. Other exemplary embodiments of the disclosure disclosed herein may be formed from a wide variety of materials, unless described otherwise herein.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A citrus juicer, comprising:
a base unit including a housing enclosing a drive motor, the housing defining a battery-receiving cavity along a portion thereof with a plurality of terminals exposed therein;
a reservoir assembly mountable on the base unit and enclosing a liquid receiving cavity;
a juicing implement rotatably mounted at least partially within the reservoir assembly and configured to be driven by the motor when the reservoir assembly is mounted on the base; and
a battery mountable in the battery-receiving cavity in electrical connection with the plurality of terminals, wherein the base unit is configured to operably power the drive motor using the battery.

2. The citrus juicer of claim 1, wherein the housing of the base unit defines:
an upper surface with a drive shaft of the base unit extending from the upper surface and connected with the motor through the housing; and
a projection extending upwardly from the upper surface and surrounding the drive shaft, wherein the reservoir assembly is mountable on the base unit by receipt of the projection within a lower cavity defined on the reservoir assembly.

3. The citrus juicer of claim 2, wherein:
the projection defines an alignment tab extending outwardly away from the drive motor along the upper surface of the housing; and
the reservoir assembly includes a bowl body defining the lower cavity of the reservoir assembly, the bowl body defining a notch corresponding with the alignment tab for receipt thereof into the notch when the reservoir assembly is mounted on the base unit by substantially vertical movement of the bowl body toward the base unit.

4. The citrus juicer of claim 3, wherein a detent feature is defined between the notch and the projection and is configured to provide user feedback when the reservoir assembly is moved into a mounted position on the base unit including receipt of the projection into the notch.

5. The citrus juicer of any one of claims 1 to 4, wherein:
the reservoir assembly includes a bowl body and a strainer removably disposable in the bowl; and
the bowl body defines an interior support through which a drive shaft operably associated with the motor extends, the interior support defining a ledge that at least partially supports the strainer within a top portion of the bowl body.

6. The citrus juicer of any one of claims 1 to 4, wherein the battery-receiving cavity is configured for receiving the battery in a releasably-retaining arrangement by movement of the battery into the battery-receiving cavity in a radial direction with respect to the base unit.

7. The citrus juicer of claim 1, wherein:
the juicing implement is moveable in a downward direction into the liquid receiving cavity against an upward spring bias; and
movement of the juicing implement in the downward direction operates a switch configured to activate operation of the motor to drive the juicing implement.

8. The citrus juicer of claim 7, wherein the switch is connected with a controller that is configured to control operation of the motor including activating operation of the motor and to reverse an operating direction of motor at predetermined intervals during operation to cause an oscillating rotation of the juicing implement.

9. The citrus juicer of either claim 7 or claim 8, wherein the switch is connected with a controller that is configured to control operation of the motor including activating operation of the juicing implement in alternating opposite directions on successive activations by downward movement of the juicing implement.

10. The citrus juicer of any one of claims 1 to 4, wherein the reservoir assembly includes:
a bowl body defining at least a lower portion of the liquid receiving cavity, the bowl body defining a fluid outlet configured to allow a flow of liquid out from the liquid receiving cavity; and
a flap valve hingedly connected with the bowl body and rotatable into a sealing position wherein a portion of the flap valve is disposed over the fluid outlet and further rotatable into a dispensing position wherein the fluid outlet is open to allow the flow of liquid out from the liquid receiving cavity.

11. The citrus juicer of any one of claims 1 to 4, wherein the reservoir assembly includes:
a bowl body defining at least a lower portion of the liquid receiving cavity, the bowl body defining a valve housing extending from the bowl body adjacent the lower portion of the liquid receiving cavity and a fluid outlet in communication with a side wall of the valve housing to allow a flow of liquid out from the liquid receiving cavity; and
a valve body rotatably coupled within the valve housing and moveable between a closed position, in which a portion of the valve body extends over an intersection of the fluid outlet with the valve housing, and a dispensing position, in which the intersection is uncovered by the valve body.

12. A citrus juicer, comprising:
a base unit including a housing enclosing a drive motor, the housing defining a battery-receiving cavity along a portion thereof with a plurality of terminals exposed therein;
a reservoir assembly mountable on the base unit and enclosing a liquid receiving cavity;
a juicing implement rotatably mounted at least partially within the reservoir assembly and configured to be driven by the motor when the reservoir assembly is mounted on the base; and
a battery releasably mountable in the battery-receiving cavity by movement of the battery into the battery-receiving cavity in a radial direction with respect to the base unit, wherein mounting of the battery within the battery-receiving cavity connects the battery with the plurality of electrical terminals for powering the motor.

13. The citrus juicer of claim 12, wherein the housing of the base unit defines:
an upper surface with a drive shaft of the base unit extending from the upper surface and connected with the motor through the housing; and
a projection extending upwardly from the upper surface and surrounding the drive shaft, wherein the reservoir assembly is mountable on the base unit by receipt of the projection within a lower cavity defined on the reservoir assembly.

14. The citrus juicer of either claim 12 of claim 13, wherein the reservoir assembly includes:
a bowl body defining at least a lower portion of the liquid receiving cavity, the bowl body defining a fluid outlet configured to allow a flow of liquid out from the liquid receiving cavity; and
a flap valve hingedly connected with the bowl body and rotatable into a sealing position wherein a portion of the flap valve is disposed over the fluid outlet and further rotatable into a dispensing position wherein the fluid outlet is open to allow the flow of liquid out from the liquid receiving cavity.

15. The citrus juicer of either claim 12 or claim 13, wherein the reservoir assembly includes:
a bowl body defining at least a lower portion of the liquid receiving cavity, the bowl body defining a valve housing extending from the bowl body adjacent the lower portion of the liquid receiving cavity and a fluid outlet in communication with a side wall of the valve housing to allow a flow of liquid out from the liquid receiving cavity; and
a valve body rotatably coupled within the valve housing and moveable between a closed position, in which a portion of the valve body extends over an intersection of the fluid outlet with the valve housing, and a dispensing position, in which the intersection is uncovered by the valve body.

16. A citrus juicer, comprising:
a base unit including a housing enclosing a drive motor, the housing defining a battery-receiving cavity along a portion thereof with a plurality of terminals exposed therein;
a reservoir assembly mountable on the base unit and enclosing a liquid receiving cavity;
a juicing implement rotatably mounted at least partially within the reservoir assembly and configured to be driven by the motor when the reservoir assembly is mounted on the base; and
a controller configured to operate the motor including by driving rotational operation of the juicing implement in alternating opposite directions to cause an oscillating rotation of the juicing implement.

17. The citrus juicer of claim 16, wherein:
the juicing implement is moveable in a downward direction into the liquid receiving cavity against an upward spring bias;
movement of the juicing implement in the downward direction operates a switch in electrical communication with the controller to activate operation of the motor to drive the juicing implement.

18. The citrus juicer of claim 17, wherein the controller is configured to control operation of the motor including activating operation of the juicing implement in alternating opposite directions on successive activations of the switch by downward movement of the juicing implement.

19. The citrus juicer of any one of claims 16 to 18, wherein the controller is configured to control operation of the motor including activating operation of the motor and to reverse the operating direction of motor at predetermined intervals during operation.

20. The citrus juicer of claim 16, wherein:
the battery-receiving cavity is configured for releasable mounting of a battery therein by movement of the battery into the battery-receiving cavity in a radial direction with respect to the base unit; and
mounting of the battery within the battery-receiving cavity connects the battery with the plurality of electrical terminals for powering the drive motor.
